# EUROPÄISCHE PATENTSCHRIFT

(11) **EP 4 143 148 B1**
(45) Veröffentlichungstag und Bekanntmachung des Hinweises auf die Patenterteilung: **03.04.2024**
(21) Anmeldenummer: 21752542.7
(22) Anmeldetag: 30.07.2021
(51) Int. Cl.: C04B 37/02, C04B 35/645, C03C 27/04

(54) **VERFAHREN ZUR HERSTELLUNG EINES TRÄGERSUBSTRATS UND EIN TRÄGERSUBSTRAT HERGESTELLT MIT EINEM SOLCHEN VERFAHREN**
METHOD FOR PRODUCING A SUPPORT SUBSTRATE, AND A SUPPORT SUBSTRATE PRODUCED USING SUCH A METHOD
PROCÉDÉ DE PRODUCTION DE SUBSTRAT DE SUPPORT ET SUBSTRAT DE SUPPORT PRODUIT EN UTILISANT UN TEL PROCÉDÉ

(30) Priorität: 30.07.2020 DE 102020120188
(43) Veröffentlichungstag der Anmeldung: 08.03.2023
(73) Patentinhaber: Rogers Germany GmbH, 92676 Eschenbach (DE)
(72) Erfinder: BRITTING, Stefan, 91220 Schnaittach (DE); ENGEL, Maximilian, 92706 Luhe-Wildenau (DE)
(74) Vertreter: Müller Schupfner & Partner Patent- und Rechtsanwaltspartnerschaft mbB
(86) Internationale Anmeldenummer: PCT/EP2021/071426
(87) Internationale Veröffentlichungsnummer: WO 2022/023543

(56) Entgegenhaltungen:
- EP-A1- 3 605 601
- JP-A- 2019 127 432
- US-A1- 2012 114 966
- US-A1- 2017 036 961
- US-A1- 2019 002 359
- YU HUA LIU ET AL: "Brazing Ceramics to Titanium Using Amorphous Filler Metal", WELDING JOURNAL, AMERICAN WELDING SOCIETY, MIAMI, FL, US, Bd. 93, Nr. 11, 1. November 2014 (2014-11-01), Seiten 66-70, XP001593234, ISSN: 0043-2296
- YING ZHU ET AL: "The braze joint between Al2O3 to 1Cr18Ni9Ti using a nickel foam", WELDING IN THE WORLD, SPRINGER, DE, Bd. 59, Nr. 4, 1. Juli 2015 (2015-07-01), Seiten 491-496, XP001596504, ISSN: 0043-2288, DOI: 10.1007/S40194-015-0224-5 [gefunden am 2015-02-08]
- KATSUAKI SUGANUMA ET AL: "Effect of Interlayers in Ceramic-Metal Joints with Thermal Expansion Mismatches", JOURNAL OF THE AMERICAN CERAMIC SOCIETY,, Bd. 67, Nr. 12, 1. Dezember 1984 (1984-12-01), Seiten C-256, XP001351472,

## Beschreibung

Die vorliegende Erfindung betrifft ein Verfahren zur Herstellung eines Trägersubstrats und ein Trägersubstrat hergestellt mit einem solchen Verfahren.

Trägerplatten in Form eines Metall-Keramik-Substrats, sind als Leiterplatten oder Platinen aus dem Stand der Technik hinlänglich bekannt, beispielsweise aus der DE 10 2013 104 739 A1, der DE 19 927 046 B4 und der DE 10 2009 033 029 A1. Typischerweise werden auf einer Bauteilseite des Metall-Keramik-Substrats Anschlussflächen für elektrische Bauteile und Leiterbahnen angeordnet, wobei die elektrischen Bauteile und die Leiterbahnen zu elektrischen Schaltkreisen zusammenschaltbar sind. Wesentliche Bestandteile der Metall-Keramik-Substrate sind ein Isolationselement, das bevorzugt aus einer Keramik gefertigt ist, und wenigstens eine an das Isolationselement angebundene Metallschicht. Wegen ihrer vergleichsweise hohen Isolationsfestigkeiten haben sich aus Keramik gefertigte Isolationsselemente in der Leistungselektronik als besonders vorteilhaft erwiesen. Durch eine Strukturierung der Metallschicht können sodann Leiterbahnen und/oder Anschlussflächen für die elektrischen Bauteile realisiert werden.

Voraussetzung für das Bereitstellen eines Metall-Keramik-Substrats ist eine dauerhafte Anbindung der Metallschicht an die Keramikschicht. Neben einem sogenannten Direktanbindungsverfahren, d. h. einem DCB- oder DAB-Verfahren, ist es aus dem Stand der Technik bekannt, die Metallschicht über ein Lotmaterial an die Keramikschicht anzubinden.

Unter einem Aktivlotverfahren, z. B. zum Verbinden von Metallschichten oder Metallfolien, insbesondere auch von Kupferschichten oder Kupferfolien, mit Keramikmaterial, ist ein Verfahren zu verstehen, welches speziell zum Herstellen von Metall-Keramik-Substraten verwendet wird. Dabei wird bei einer Temperatur zwischen ca. 650-1000°C eine Verbindung zwischen einer Metallfolie, beispielsweise einer Kupferfolie, und einem Keramiksubstrat, beispielsweise einer Aluminiumnitrid-Keramik, unter Verwendung eines Hartlots hergestellt, welches zusätzlich zu einer Hauptkomponente wie Kupfer, Silber und/oder Gold auch ein Aktivmetall enthält. Dieses Aktivmetall, welches beispielsweise wenigstens ein Element aus der Gruppe Hf, Ti, Zr, Nb, Ce ist, stellt durch chemische Reaktion eine Verbindung zwischen dem Lot und der Keramik her, während die Verbindung zwischen dem Lot und dem Metall eine metallische Hartlöt-Verbindung ist.

Aus der DE 10 2015 108 668 ist es bekannt, eine Folie als Lotmaterial zu verwenden. Aus der US 2018 0 169 796 A ist ein dreischichtiges Lotmaterial bekannt, bei dem die Außenlagen durch zwei Schichten aus Aktivmetall gebildet werden. Die Folien sind dabei dicker als 100 µm.

In der US 6,722,002 B1 ist ein Verfahren beschrieben, bei dem zur Ausbildung einer Lotfolie eine Titanfolie durch Walzen zwischen Kupfer bzw. Kupfer/Nickel-Folien angeordnet wird. Dabei liegen die Foliendicken oberhalb von 100 µm. In der US 3,981,429 ist eine mehrschichtige Lötfolie beschrieben, bei der eine Titanschicht eine Dicke aufweist, die dünner ist als 25 µm. Diese Lötfolie soll Verwendung im Flugzeugbau finden, insbesondere beim Anbinden an eine Wabenstruktur. US2012114966 zeigt die Verbindung einer Kupferschicht mit einer ; Aluminiumoxidschicht mittels einem Nickellegierunglotmaterial.

Es ist daher eine Aufgabe der vorliegenden Erfindung, den Herstellungsprozess eines Trägersubstrats zu verbessern, insbesondere zu vereinfachen und flexibler zu gestalten.

Die vorliegende Erfindung löst diese Aufgabe mit einem Verfahren zur Herstellung eines Trägersubstrats gemäß Anspruch 1 und mit einem Trägersubstrat hergestellt mit einem solchen Verfahren gemäß Anspruch 12. Weitere Ausführungsformen sind den abhängigen Ansprüchen und der Beschreibung zu entnehmen.

Gemäß einem ersten Aspekt der vorliegenden Erfindung ist ein Verfahren zur Herstellung eines Trägersubstrats, nämlich eines Metall-Keramik-Substrats, vorgesehen, umfassend:
- Bereitstellen eines Isolationselements, eines Keramikelements oder eines Glaselements, und mindestens einer Metallschicht, wobei sich das Isolationselement und die mindestens eine Metallschicht entlang einer Haupterstreckungsebene erstrecken,
- Bereitstellen eines Lotmaterials,
- Bilden eines Stapels oder Ensembles, in dem das Isolationselement, die mindestens eine Metallschicht und das Lotmaterial in einer senkrecht oder im wesentlichen senkrecht zur Haupterstreckungsebene verlaufenden Stapelrichtung übereinander angeordnet sind, wobei das Lotmaterial zwischen dem Isolationselement und der mindestens einen Metallschicht angeordnet wird, und
- Anbinden der mindestens einen Metallschicht an das Isolationselement über das Lotmaterial, wobei die mindestens eine Metallschicht ein Aktivmetall aufweist.

Gegenüber den aus dem Stand der Technik bekannten Verfahren ist es erfindungsgemäß vorgesehen, mindestens eine Metallschicht zu verwenden, die bereits selbst ein Aktivmetall als Bestandteil aufweist. Dies gestattet es, einen Aktivmetallanteil im Lotmaterial zu reduzieren oder sogar auf Aktivmetall im Lotmaterial zu verzichten. Dadurch wird in vorteilhafter Weise der Aufwand reduziert, da insbesondere bei der Lotmaterialherstellung nicht auf die ausreichende Bereitstellung eines Aktivmetalls geachtet werden muss. Zudem kann auf vergleichsweise aufwändig und kostenintensiv hergestellte Aktivmetallschichten verzichtet werden, die andernfalls erforderlich wären, um die Bindung der mindestens einen Metallschicht an das Isolationselement zu gewährleisten. Außerdem ist man bei der Wahl des Lotmaterials, insbesondere eines Hartlotmaterials, flexibler.

Als Trägersubstrat ist eine Leiterplatte zu verstehen, die im gefertigten Zustand dazu dient, Leiterbahnenanschlussflächen und/oder Kontakte bereitzustellen, an denen bzw. mit denen elektrische Bauteile montiert und/oder zusammengeschaltet werden können. Das Anbinden der mindestens einen Metallschicht an das Isolationselement erfolgt dabei über das Lotmaterial, in dem eine erforderliche Prozesstemperatur, die vom Lotmaterial abhängt, eingestellt wird. Vorzugsweise liegt die Prozesstemperatur bei einer Temperatur bis zu 900 °C. Durch das Zusetzen von schmelzpunkterniedrigenden Materialien, wie beispielsweise Phosphor, ist es auch vorstellbar, Anbindungen bei Temperaturen unterhalb von 900 °C, beispielsweise bei 600°, zu ermöglichen. Dadurch ist ein erforderlicher Energieaufwand für die Anbindung im Vergleich zur Direktmetallanbindung, wie sie beispielsweise im DCB- oder DAB-Verfahren herangezogen werden, reduziert. Vorteilhaft bei der Verwendung von Glas als Isolationselement ist dessen geringe Oberflächenrauhigkeit, die sich positiv auf die Anbindung auswirkt.

Als Grundmaterialien, d. h. als Hauptbestandteil, für die mindestens eine Metallschicht und/oder die mindestens eine weitere Metallschicht im Metall-Keramik-Substrat bzw. Isolationselement sind - zusätzlich zu dem Aktivmetall - Kupfer, Aluminium, Nickel, Cobalt, Eisen, Silber, Molybdän und/oder deren Legierungen, verschiedene CuSn (Bronze) und CuZn (Messing), sowie Laminate wie CuW, CuMo, CuAl und/oder AlCu oder MMC (metal matrix composite), wie CuW, CuMo oder AlSiC vorstellbar. Weiterhin ist bevorzugt vorgesehen, dass die mindestens eine Metallschicht am gefertigten Metall-Keramik-Substrat, insbesondere als Bauteilmetallisierung, oberflächenmodifiziert ist. Als Oberflächenmodifikation ist beispielsweise eine Versiegelung mit einem Edelmetall, insbesondere Silber und/oder Gold, oder ENIG (*"electroless nickel immersion gold*") oder ein Kantenverguss an der Metallisierung zur Unterdrückung einer Rissbildung bzw. -weitung denkbar. Beispielsweise handelt es sich bei dem Material für die mindestens eine Metallschicht um eine CuZr- oder eine CuCrZr-Legierung, bei denen ein Anteil an Zr kleiner als 0,2 Gew.% und/oder der Anteil an Cr kleiner als 2 Gew.-% ist. Weitere Beispiele sind CuMo, CuW, pulvermetallurgische Verbundwerkstoffe CuWTi, CuMoTi, CuZr, CuTi, CuNbTi, WCuTi, MoCuTi, CrCuTi, TiCu und/oder NbCu. Beispielsweise wird hierbei als Lotmaterial bzw. Lotbasismaterial CuAg, CuAgln oder Ähnliches verwendet. Besonders bevorzugt handelt es sich bei der mindestens einen Metallschicht um eine titanhaltige Kupferschicht.

Weiterhin ist es bevorzugt vorgesehen, dass eine Rauigkeit Rₐ einer Oberfläche des Isolationselements zumindest bereichsweise kleiner ist als 1,0 µm, bevorzugt kleiner als 0,7 µm und besonders bevorzugt kleiner als 0,5 µm. Durch die Reduktion der Rauigkeit an der Oberfläche des Isolationselements ist es in vorteilhafter Weise möglich, Poren oder Hohlbereiche zu vermeiden, in denen sich Sauerstoff ansammeln kann, der wiederrum im Sinne einer Verunreinigung der effektiven Nutzung des Aktivmetalls zur Anbindung der mindestens einen Metallschicht an das Isolationselement abträglich wäre. Insbesondere wird eine Mittenrauigkeit angenommen. Der Mittenrauwert, dargestellt durch das Symbol Rₐ, gibt einen mittleren Abstand eines Messpunktes - auf der Oberfläche - zu einer Mittellinie an. Die Mittellinie schneidet innerhalb einer Bezugsstrecke das wirkliche Profil so, dass eine Summe der Profilabweichungen in einer parallelen Ebene zur Mittellinie auf eine Länge der Bezugsstrecke verteilt wird.

Wird beispielsweise eine benetzte Oberfläche an dem Keramikelement, insbesondere eines Si₃N₄-Substrats, zu groß, führt das zu einer unvollständigen Bindung der mindestens einen Metallschicht bei einer Metalllegierung wie CuZr.

Vorzugsweise weist das Keramikelement Al₂O₃, Si₃N₄, AIN, eine HPSX-Keramik (d. h. eine Keramik mit einer Al₂O₃- Matrix, die einen x-prozentigen Anteil an ZrO₂ umfasst, beispielsweise Al₂O₃ mit 9% ZrO₂ = HPS9 oder Al₂O₃ mit 25% ZrO₂ = HPS25), SiC, BeO, MgO, hochdichtes MgO (> 90% der theoretischen Dichte), TSZ (tetragonal stabilisiertes Zirkonoxid) als Material für die Keramik auf. Es ist dabei auch vorstellbar, dass das Keramikelement als Verbund- bzw. Hybridkeramik ausgebildet ist, bei der zur Kombination verschiedener gewünschter Eigenschaften mehrere Keramikschichten, die sich jeweils in Hinblick auf ihre materielle Zusammensetzung unterscheiden, übereinander angeordnet und zu einem Isolationselement zusammengefügt sind. Denkbar ist auch, dass im Keramikelement zwischen zwei Keramikschichten eine metallische Zwischenschicht angeordnet ist, die vorzugsweise dicker als 1,5 mm und/oder dicker als die zwei Keramikschichten in Summe ist. Vorzugsweise wird eine möglichst wärmeleitfähige Keramik für einen möglichst geringen Wärmewiderstand verwendet. Bei der Verwendung von Glas als Isolationselement erweist es sich als besonders vorteilhaft, dass Glas eine glatte Oberfläche aufweist.

Das Aktivmetall kann Titan (Ti), Zirkonium (Zr), Hafnium (Hf), Chrom (Cr), Niob (Nb), Cer (Ce), Tantal (Ta), Magnesium (Mg), Lanthan (La) und Vanadium (V) sein. Hierbei ist zu beachten, dass die Metalle La, Ce, Ca und Mg innerhalb einer PVD-Anlage oxidieren. Ferner wird angemerkt, dass die Elemente Cr, Mo und W keine klassischen Aktivmetalle sind, sich aber als Kontaktschicht zwischen Si₃N₄ und der mindestens einen Metallschicht bzw. dem Lotsystem bzw. Lotmaterial eignen, da sie mit der mindestens einen Metallschicht, beispielsweise Kupfer, keine intermetallischen Phasen bilden und keine Randlöslichkeit haben. Es handelt sich bei dem Lotmaterial um ein Lotbasismaterial, vorzugsweise um ein metallbasiertes Basismaterial, beispielsweise um ein silberbasiertes oder ein kupferbasiertes Basismaterial. In einem silberbasierten Basismaterial ist Silber die Hauptkomponente, d. h. der Bestandteil mit dem bezüglich der Gewichtsprozente höchsten Anteil, während in einem kupferbasierten Basismaterial Kupfer die Hauptkomponente ist. Beispiele für ein silberbasiertes Basismaterial sind AgCu, insbesondere AgCu28, AgCuln, AgCuSn und AgCuGa. Beispiele für ein kupferbasiertes Basismaterial sind Kupfer CuSn, CuAg, Culn, CuGa, CuInSn, CuInMb, CuGaSn. Auch ist es vorstellbar, das Lotbasismaterial NiCrMn oder SnCu zu verwenden. Insbesondere sind als Lotmaterial solche Metalle bevorzugt, die ein eutektisches System bilden, wie beispielsweise AgCu, oder System mit lückenlosen Mischkristallen CuNi. Vorzugsweise handelt es sich bei dem Lotmaterial bzw. dem Lotbasismaterial um ein silberfreies Lotmaterial.

Insbesondere handelt es sich um ein aktivmetallfreies Lotbasismaterial. Dadurch wird insbesondere darauf verzichtet, ein solches Lotmaterial zu verwenden, das als Bestandteil ein Aktivmetall umfasst. Dabei ist es insbesondere vorgesehen, dass auch keine weitere Aktivmetallschicht separat zu dem Lotbasismaterial zwischen der mindestens einen Metallschicht und dem Isolationselement angeordnet wird. Dabei ist es vorstellbar, dass das Lotmaterial als Paste und/oder als Folie zwischen der mindestens einen Metallschicht und dem Isolationselement angeordnet wird. Vorzugsweise ist zwischen der mindestens einen Metallschicht und dem Isolationselement kein Aktivmetall angeordnet, sei es in einer Lötpaste oder als separate Aktivmetallschicht.

Das Lotbasismaterial enthält einen Anteil an Aktivmetall von weniger als 1,5 Gew. -%, bevorzugt weniger als 1,0 Gew. -% und besonders bevorzugt weniger als 0,5 Gew. - %. Vorzugsweise wird ausschließlich das Lotbasismaterial, insbesondere ohne Aktivmetallschicht oder mit reduzierten Aktivmetallanteil, zwischen die anzubindende, mindestens eine Metallschicht und das Isolationselement angeordnet. Es hat sich in überraschender Weise herausgestellt, dass es mit der einer mindestens einen Metallschicht, die selbst bereits einen gewissen Anteil an Aktivmetall aufweist, mit Vorteil möglich ist, eine Anbindung an die Isolationsschicht zu schaffen, wenn der Aktivmetallanteil deutlich unterhalb demjenigen Anteil liegt, der typischerweise für die üblichen Lötmaterialien vorgesehen ist. Statt der üblichen 10 Gew. -% können somit auch Lötmaterialien verwendet werden, die einen reduzierten Aktivmetallanteil aufweisen.

Vorzugsweise ist das Aktivmetall in der mindestens einen Metallschicht homogen verteilt, insbesondere entlang der Stapelrichtung über die gesamte Dicke der mindestens einen Metallschicht. Insbesondere ist das Aktivmetall im Sinne einer Dotierung gleichmäßig in der mindestens einen Metallschicht verteilt. Dies trifft insbesondere auf das Ausgangsmaterial zu. Damit handelt es sich um mindestens eine Metallschicht, deren Aktivmetallanteil sich über die gesamte Dicke im Wesentlichen nicht ändert. Mit anderen Worten: an der Oberseite und der Unterseite der mindestens einen Metallschicht liegt im Wesentlichen derselbe Aktivmetallanteil vor und es ist über die gesamte Dicke der mindestens einen Metallschicht kein Gradient in der Verteilung des Aktivmetalls vorgesehen. Im gefertigten Substrat ist es vorstellbar, dass sich im Grenzbereich zwischen der mindestens einen Metallschicht und der Isolationsschicht ein Gradient bzw. ein stetiger Verlauf für die Dichte an Aktivmetall ergibt, der auf die Bindung zwischen der mindestens einen Metallschicht und der Isolationsschicht zurückzuführen ist.

Vorzugsweise ist es vorgesehen, dass das Aktivmetall in der mindestens einen Metallschicht homogen verteilt ist, insbesondere entlang der Stapelrichtung über die gesamte Dicke der mindestens einen Metallschicht. Somit sind insbesondere keine mehrlagigen Systeme unter der mindestens einen Metallschicht zu verstehen. Bevorzugt wird genau eine einzige Metallschicht an das Isolationselement angebunden.

Vorzugsweise ist eine Dicke der mindestens einen Metallschicht größer als 1 mm, bevorzugt größer als 1 mm und besonders bevorzugt größer als 1,8 mm. Besonders dicke, mindestens eine Metallschichten erweisen sich als vorteilhaft, weil sie im Leistungsmodul einen schnellen Wärmeabtransport gewährleisten können. Ferner wird durch die entsprechende Größe der mindestens einen Metallschicht auch ein ausreichend großes Reservoir an Aktivmetall bereitgestellt. Das Aktivmetall liegt vorzugsweise als eine Art Dotierung in der mindestens einen Metallschicht vor.

Weiterhin ist es bevorzugt vorgesehen, dass das Lotmaterial als Folie bereitgestellt wird, deren in Stapelrichtung gemessene Dicke insbesondere kleiner als 40 µm, bevorzugt kleiner als 20µmund besonders bevorzugt kleiner als 10 µm. Vorzugsweise nimmt die Folie eine Dicke zwischen 2 µm und 20 µm, bevorzugt zwischen 2 µm und 10 µm und besonders bevorzugt zwischen 2 µm und 8 µm an. Derartig dünne Folien gestatten ein erfolgreiches Durchdiffundieren des Aktivmetalls aus der mindestens einen Metallschicht in die Grenzzone bzw. in den Bereich der späteren Bindungsschicht zwischen der mindestens einen Metallschicht und dem Isolationselement. Zudem erweist es sich als vorteilhaft, dass eine vergleichsweise dünne Bindungsschicht aufgrund der vergleichsweise geringen Menge an Lotmaterial zwischen der mindestens einen Metallschicht und dem Isolationselement ausgebildet wird. Dies erweist sich insbesondere deswegen als vorteilhaft, weil der Ätzschritt zur Strukturierung, insbesondere ein "second etching", der insbesondere darauf abzielt, die Bindungsschicht zwischen der mindestens einen Metallschicht und dem Isolationselement zu entfernen, vereinfacht wird.

Weiterhin ist es bevorzugt vorgesehen, dass die mindestens eine Metallschicht in einem Verbund eine erste Metalllage und eine zweite Metalllage umfasst, wobei sich die erste Metalllage von der zweiten Metalllage unterscheidet. Insbesondere ist es vorgesehen, dass die erste Metalllage - im Stapel aus Isolationselement, der mindestens einen Metallschicht und dem Lotmaterial - dem Isolationselement bzw. dem Lotmaterial zugewandt ist. Vorzugsweise ist es vorgesehen, dass die erste Metalllage das Aktivmetall umfasst, während ein Anteil an Aktivmetall in der zweiten Metalllage reduziert ist und/oder wobei die zweite Metalllage frei von einem Aktivmetall ist. Dadurch ist man flexibler in der Ausgestaltung der außenliegenden Metalloberfläche am gefertigten Trägersubstrat. Insbesondere ist es möglich, Einfluss zu nehmen auf die Körnung der Metalloberfläche der mindestens einen Metallschicht am gefertigten Trägersubstrat, insbesondere indem die Korngröße über eine Dicke der ersten Metalllage und/oder der zweiten Metalllage eingestellt wird und eine feinkörnigen Bereich räumlich auf die erste Metalllage oder die zweite Metalllage begrenzt wird. Dies erweist sich insbesondere bei Metall-Keramik-Substraten als vorteilhaft, da dadurch ein vorteilhafter Effekt auf die Temperaturwechselbeständigkeit der Grenzschicht zwischen der mindestens einen Metallschicht und dem Isolationselement bewirkt wird. Gleichzeitig stellt die feinere Körnung an der Außenseite der mindestens einen Metallschicht sicher, dass ein Anbinden von Bauteilen und/oder Drähten an die mindestens eine Metallschicht vereinfacht wird und/oder eine automatische optische Inspektion (AOI) prozesssicher durchgeführt werden kann. Vorzugweise ist eine Dicke der ersten Metalllage kleiner als eine Dicke der zweiten Metalllage.

Vorzugsweise ist es vorgesehen, dass das Lotmaterial strukturiert aufgetragen wird. Dadurch kann gezielt in bestimmten Bereichen eine Anbindung zwischen der mindestens einen Metallschicht und dem Isolationselement geschwächt werden und/oder sogar verhindert werden. Vorzugsweise verlaufen diese Bereiche, in denen keine Bindung oder eine schwache Bindung zwischen der mindestens einen Metallschicht und dem Isolationselement erfolgt, entlang späterer Sollbruchlinien und/oder Isolationsgräben zwischen einzelnen Abschnitten der mindestens einen Metallschicht. Dadurch wird sichergestellt, dass in solchen Bereichen, in denen ohnehin die Metallschicht im Rahmen einer Strukturierung des Trägersubstrats abgetragen wird, der Arbeitsaufwand für das Entfernen von Bereichen in der mindestens einen Metallschicht reduziert ist.

Nicht Teil der Erfindung ist, dass das Lotmaterial eine Aktivmetallschicht umfasst. Dabei ist es vorgesehen, dass zusätzlich zu dem Aktivmetall in der mindestens einen Metallschicht eine separate Aktivmetallschicht verwendet wird, die Teil eines Lotsystems des Lotmaterials ist. Dadurch wird die Anbindung und insbesondere die Verteilung des Aktivmetalls an der Grenzschicht verbessert. Durch die Verwendung der mindestens einen Metallschicht, die ein Aktivmetall als Bestandteil aufweist, ist es dabei in vorteilhafter Weise möglich, auch solche Aktivmetallschichten noch zu verwenden, die beispielsweise Risse und/oder Fehlstellen aufweisen, die sich beispielsweise fertigungsbedingt ergeben, da auf Aktivmetall aus der mindestens einen Metallschicht zurückgegriffen werden kann. Außerdem ist es in vorteilhafter Weise möglich, die Aktivmetallschicht, die separater Bestandteil des Lotmaterials ist, in Hinblick auf Ihre Dicke weiter zu reduzieren, ohne befürchten zu müssen, dass eine Fehlstelle im Bindungsbereich bzw. in der Bindungsschicht zwischen der mindestens einen Metallschicht und dem Isolationselement ausgebildet wird. Vorzugweise wird die Aktivmetallschicht dabei über ein physikalisches Gasphasenabscheiden auf das Isolationselement aufgetragen und/oder eine Schichtdicke der Aktivmetallschicht nimmt einen Wert zwischen 10 nm und 1000 nm, bevorzugt einen Wert zwischen 50 nm und 800 nm und besonders bevorzugt einen Wert zwischen 400 nm und 600 nm an.

Ein Anteil des Aktivmetalls in der mindestens einen Metallschicht hat einen Wert zwischen 0,01 und 5 Gew.-%, bevorzugt zwischen 0,1 und 4 Gew.-% und besonders bevorzugt zwischen 0,5 und 3 Gew.-% annimmt. Durch die Verwendungen entsprechender Gewichtsprozente und Anteile an Aktivmetall in der Metallschicht ist es in vorteilhafter Weise möglich, ausreichend Aktivmetall für die erfolgreiche Bindung zwischen der mindestens einen Metallschicht und dem Isolationselement bereitzustellen.

Weiterhin ist es vorgesehen, dass das Anbinden in einem Vakuum, insbesondere in einem Hochvakuum oder in einer Edelgasatmosphäre, insbesondere bei einem Druck zwischen 1 mbar und 15 mbar durchgeführt wird. Dadurch ist es in vorteilhafter Weise möglich, zu verhindern, dass Aktivmetall, das von der mindestens einen Metallschicht in Richtung des Isolationselements wandert bzw. diffundieren muss, um eine Anbindung zu bewirken, beispielsweise von Sauerstoff gebunden wird. Dadurch wird in entsprechender und vorteilhafter Weise durch das Vakuum, insbesondere durch das Hochvakuum, sichergestellt, dass der Anteil des Aktivmetalls möglichst effektiv zur Bindung zwischen mindestens einer Metallschicht und dem Isolationselement beiträgt.

Eine Weiterentwicklung der vorliegenden Erfindung ist ein Verfahren zur Herstellung eines Trägersubstrats, nämlich eines Metall-Keramik-Substrats, umfassend:
- Bereitstellen eines Isolationselements, eines Keramikelements, eines Glaselements oder eines Glaskeramikelements, und mindestens einer Metallschicht, wobei sich das Isolationselement und die mindestens eine Metallschicht entlang einer Haupterstreckungsebene erstrecken,
- Bilden eines Stapels, in dem das Isolationselement und die mindestens eine Metallschicht in einer senkrecht zur Haupterstreckungsebene verlaufenden Stapelrichtung übereinander angeordnet sind,
- Anbinden der mindestens einen Metallschicht an das Isolationselement durch ein heißisostatisches Pressen, dadurch gekennzeichnet, dass die mindestens eine Metallschicht ein Aktivmetall umfasst. Alle beschriebenen Merkmale und Eigenschaften für das Verfahren mit dem Lotmaterial treffen in analoger Weise auch auf das Verfahren mittels heißisostatischem Pressen zu und andersrum.

Es hat sich mit Vorteil herausgestellt, dass eine Art Dotierung der mindestens einen Metallschicht mit Aktivmetall ebenfalls ausreichen kann bzw. sich positiv auf die Bindung auswirken kann, wenn statt eines Lötverfahrens eine heißisostatisches Pressen zur Anbindung verwendet wird.

Vorzugsweise ist es vorgesehen, dass beim heißisostatischen Pressen der Behälter, insbesondere der Metallbehälter, in einer Heiz- und Druckvorrichtung einem Gasdruck zwischen 100 und 2000 bar, bevorzugt 150 bar und 1200 bar und besonders bevorzugt 300 und 1000 bar und einer Prozesstemperatur von 300 °C bis zu einer Schmelztemperatur der Metalllage und/oder einer weiteren Metalllage, insbesondere bis zu einer Temperatur unterhalb der Schmelztemperatur der Metalllage und/oder der weiteren Metalllage, ausgesetzt wird. Es hat sich in vorteilhafter Weise herausgestellt, dass es so möglich ist, eine Metallschicht, d. h. die mindesten eine Metallschicht bzw. die Metalllage und/oder die weitere Metalllage des Metallbehälters, an das Keramikelement anzubinden, ohne die erforderlichen Temperaturen eines Direktmetallanbindungsverfahrens, beispielsweise eines DCB- oder einem DAB-Verfahrens, zu erreichen. Darüber hinaus gestattet das Nutzen bzw. die Verwendung eines entsprechenden Gasdrucks die Möglichkeit, möglichst lunkerfrei, d. h. ohne Gaseinschlüsse zwischen Metallschicht und Keramikelement ein Metall-Keramik-Substrat zu fertigen. Insbesondere finden Prozessparameter Verwendung, die in der DE 10 2013 113 734 A1 erwähnt werden im Zusammenhang mit dem heißisostatischen Pressen.

Beim heißisostatischen Pressen ist es insbesondere vorgesehen, dass ein Erhitzen erfolgt, insbesondere ein Sintern und/oder Tempern, bei dem die Metalllage und/oder die weitere Metalllage des Metallbehälters und/oder die mindestens eine Metallschicht, insbesondere die spätere Metallisierung des Metall-Keramik-Substrats, nicht in die Schmelzphase übertritt. In entsprechender Weise sind beim heißisostatischen Pressen geringere Temperaturen als bei einem Direktmetallanbindungsverfahren, insbesondere einem DCB-Verfahren, erforderlich. Die Verwendung bzw. die Nutzung des Drucks beim heißisostatischen Pressen erweist sich dabei zudem als vorteilhaft, weil dadurch Lufteinschlüsse bzw. Poren zwischen der Metalllage und/oder der weiteren Metalllage bzw. der mindestens einen Metallschicht einerseits und dem Keramikelement andererseits reduziert werden können, wodurch die Ausbildung von Lunkern in ihrer Häufigkeit im gebildeten bzw. gefertigten Metall-Keramik-Substrat reduziert oder gar vermieden werden kann. Dies wirkt sich vorteilhaft auf die Qualität der Bindung zwischen der mindestens einen Metallschicht bzw. der Metalllage und/oder weiteren Metalllage des Metallbehälters und dem Keramikelement aus. Insbesondere wird auf diese Weise ein "solid-state diffusion bonding" (SDB)-Verfahren realisiert.

Ein weiterer Gegenstand der vorliegenden Erfindung ist ein Trägersubstrat, hergestellt mit einem erfindungsgemäßen Verfahren. Alle für das Verfahren beschriebenen Eigenschaften und Vorteile lassen sich analog übertragen auf das Trägersubstrat und andersrum.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsform können dabei im Rahmen der Erfindung miteinander kombiniert werden.

Es zeigt:
- **Fig.1:**: eine schematische Darstellung eines Verfahrens zur Herstellung eines Trägersubstrats gemäß einer ersten beispielhaften Ausführungsform der vorliegenden Erfindung
- Fig.2:: eine schematische Darstellung eines Verfahrens zur Herstellung eines Trägersubstrats gemäß einer zweiten beispielhaften Ausführungsform der vorliegenden Erfindung
- Fig.3: eine schematische Darstellung eines Verfahrens zur Herstellung eines Trägersubstrats gemäß einer dritten beispielhaften Ausführungsform der vorliegenden Erfindung.

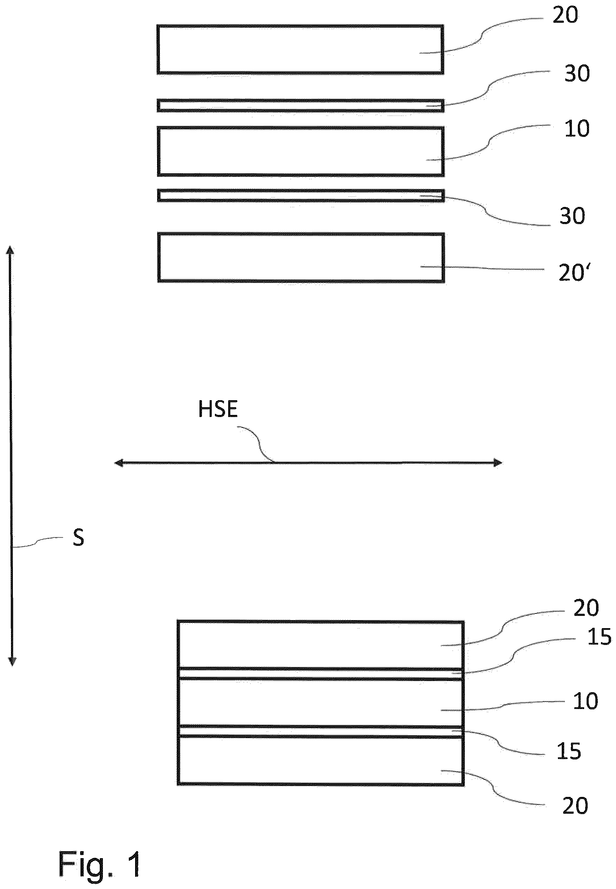

In **Figur 1** ist eine schematische Darstellung eines Verfahrens zur Herstellung eines Trägersubstrats 1 gemäß einer bevorzugten Ausführungsform der vorliegenden Erfindung illustriert. Insbesondere sind ein Isolationselement 10, bevorzugt ein Keramikelement, und mindestens eine Metallschicht 20 dargestellt, die mit einem Lotmaterial 30 zur Ausbildung eines Trägersubstrats 1, insbesondere eines Metall-Keramik-Substrats, verbunden werden sollen (in Figur 1 oben). Ein solches Lotmaterial 30 wird bevorzugt für einen Aktivlötprozess verwendet, bei dem die mindestens eine Metallschicht 20 an das Isolationselement 10 zur Ausbildung eines Trägersubstrats 1 angebunden wird. Die mindestens eine Metallschicht 20 und das Isolationselement 10 erstrecken sich dabei entlang einer Haupterstreckungsebene HSE bzw. parallel zur einer Haupterstreckungsebene HSE und werden entlang einer senkrecht zur Haupterstreckungsebene HSE verlaufenden Stapelrichtung S übereinander gestapelt. Insbesondere handelt es sich bei dem Lotmaterial 30 um eine Folie. Dabei erfolgt die Verbindung der einzelnen Fügepartner, d. h. der mindestens einen Metallschicht 20 und des Keramikelements, bei einer für das jeweilige Lotmaterial 30 vorgesehenen Arbeits- bzw. Prozesstemperatur, beispielsweise 900 °C. In den aus dem Stand der Technik bekannten Verfahren bildet das in dem Lotmaterial 30 enthaltende Aktivmetall mit der zu fügenden Oberfläche, insbesondere der Oberfläche der Keramikschicht, eine Reaktionsschicht aus.

Diese Reaktionsschicht wird wiederum von einem Lotbasismaterial benetzt, das ebenfalls Teil des Lotmaterials 30 ist. Auf diese Weise kann im Rahmen des Aktivlötprozesses die Anbindung zwischen der mindestens einen Metallschicht 20 und dem Isolationselement 10 realisiert werden, sofern sie den während des Verbindungs- bzw. Lötprozesses herrschenden Temperaturen standhalten. Insbesondere ist es vorgesehen, dass zur Anbindung das Lotmaterial 30 zwischen der mindestens einen Metallschicht 20 und dem Isolationselement 10 angeordnet wird. Im gefertigten Metall-Keramik-Substrat bzw. Trägersubstrat 1 ist dann eine Bindungsschicht 15 ausgebildet, die aus dem Lotmaterial 30 entsteht.

Nach dem Fügen der mindestens einen Metallschicht 20 und des Isolationselements 10 (unten in Figur 1) wird die mindestens eine Metallschicht 20 strukturiert, beispielsweise durch Ätzen, Laserlicht und/oder Fräsen, um Leiterbahnen und/oder Anschlussflächen auszubilden, wodurch das Trägersubstrat 1, nämlich das Metall-Keramik-Substrat, als Leiterplatte genutzt werden kann. Vorzugsweise ist neben der mindestens einen Metallschicht 20 mindestens eine weitere Metallschicht 20' vorgesehen, die an der gegenüberliegenden Seite von der mindestens einen Metallschicht 20 an dem Isolationselement 10 angebunden ist. Dabei dient die mindestens eine weitere Metallschicht 20' als Rückseitenmetallisierung, die einem andernfalls durch thermomechanische Spannungen veranlassten Durchbiegen entgegenwirkt. Zudem kann die Rückseitenmetallisierung eine Kühlstruktur aufweisen, mit der Wärme von Bauteilen auf dem Trägersubstrat weggeführt werden kann.

In dem in Figur 1 dargestellten Ausführungsbeispiel ist es vorgesehen, dass die mindestens eine Metallschicht 20 ein Aktivmetall umfasst. Dabei ist es vorgesehen, dass die mindestens eine Metallschicht 20 im Wesentlichen aus einer Hauptkomponente, die kein Aktivmetall ist, und dem Aktivmetall zusammengesetzt ist. Insbesondere handelt es sich um eine entsprechende Legierung, deren Bestandteil teilweise ein Aktivmetall ist. Infolgedessen kann auf ein Aktivmetall in dem Lotmaterial 30, beispielsweise als Aktivmetallschicht oder Folie, verzichtet werden. In entsprechender Weise reicht es aus, wenn für den Anbindungsprozess zwischen dem Isolationselement 10 und der mindestens einen Metallschicht 20 als Lotmaterial 30 ein Lotbasismaterial angeordnet ist. Um die erforderliche Bindung im Rahmen des Lotprozesses zu gewährleisten, wird Aktivmetall aus der mindestens einen Metallschicht 20 durch das Lotbasismaterial an die Grenzschicht des Isolationselements 10 hindurchdiffundieren, um zusammen mit dem Lotbasismaterial die Verbindung zwischen der mindestens einen Metallschicht 20 und dem Isolationselement 10 zu veranlassen. Vorzugsweise ist es dabei vorgesehen, dass das Lotbasismaterial als Folie vor dem Fügen zwischen der mindestens einen Metallschicht 20 und dem Isolationselement 10 in Stapelrichtung S gesehen angeordnet wird. Dabei weist das als Folie bereitgestellte Lotbasismaterial bzw. eine Lotbasismaterialschicht 32 eine in Stapelrichtung S ermessene Dicke auf, die kleiner ist als 20 µm, bevorzugt kleiner als 10 µm und besonders bevorzugt kleiner als 8 µm. Hierbei ist es vorstellbar, dass in einem vorbereitenden Arbeitsschritt das Lotbasismaterial und/oder das Lotmaterial 30 auf eine entsprechende Dicke heruntergewalzt wird, vorzugsweise in mehreren Walzschritten.

Es ist auch vorstellbar, dass zwischen der mindestens einen Metallschicht 20 und dem Isolationselement 10 ein Lotmaterial 30 angeordnet wird, das sowohl ein Lotbasismaterial als auch ein Aktivmetall umfasst. Durch die Verwendung der mindestens einen Metallschicht 20, die ein Aktivmetall umfasst, ist es dabei in vorteilhafter Weise möglich, einen Aktivmetallanteil im Lotmaterial 30 zu reduzieren, da für die Bindung zusätzlich auf das Aktivmetall in der mindestens einen Metallschicht 20 zurückgegriffen wird.

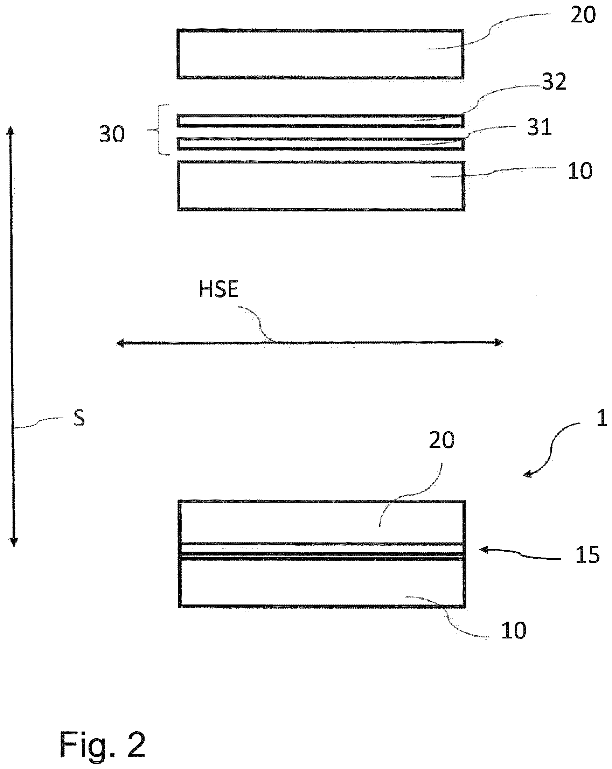

In **Figur 2** ist schematisch ein Verfahren zum Herstellen eines Trägersubstrats 1 gemäß einer zweiten beispielhaften Ausführungsform, der nicht Teil der Erfindung ist. Dabei unterscheidet sich das Ausführungsbeispiel der Figur 2 von demjenigen aus der Figur 1 dahingehend, dass zusätzlich zu einer Lotbasismaterialschicht 32 eine Aktivmetallschicht 31 vorgesehen ist, die insbesondere zwischen Lotbasismaterialschicht 32 und dem Isolationselement 10 angeordnet wird. Durch die Nutzung einer mindestens einen Metallschicht 20, die ein Aktivmetall umfasst, ist es in vorteilhafter Weise möglich, die Schichtdicke der Aktivmetallschicht 31 zu reduzieren und/oder es sogar zuzulassen, dass die Aktivmetallschicht 31 bereichsweise unterbrochen ist. Beispielsweise ist es vorstellbar, dass eine Folie bereitgestellt wird, die aus dem gemeinsamen Walzen einer Lotbasismaterialfolie und einer Aktivmetallfolie entsteht. Durch das Zurückgreifen auf das Aktivmetall, das in der mindestens einen Metallschicht 20 zu finden ist, ist es in vorteilhafter Weise möglich, das Lotmaterial 30, insbesondere die Lotbasismaterialschicht 32 mit der Aktivmetallschicht 31 möglichst dünn zu walzen, ohne berücksichtigen zu müssen, dass etwaige Risse in der Aktivmetallschicht 31 entstehen könnten.

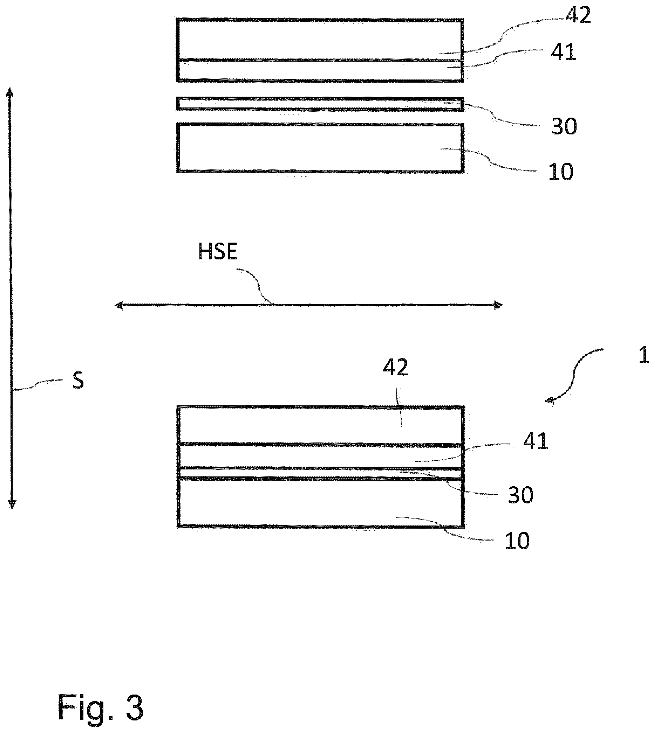

In **Figur 3** ist schematisch ein Verfahren zur Herstellung eines Trägersubstrats 1 gemäß einer dritten beispielhaften Ausführungsform dargestellt. Dabei unterscheidet sich das Ausführungsbeispiel der Figur 3 im Wesentlichen von denjenigen aus den Figuren 1 und 2 dahingehend, dass die mindestens eine Metallschicht 20 eine erste Metalllage 41 und eine zweite Metalllage 42 umfasst. Beispielsweise wird die mindestens eine Metallschicht 20 in dem Ausführungsbeispiel der Figur 3 durch einen gemeinsamen Walzschritt hergestellt, wobei die im gefertigten Zustand dem Isolationselement 10 zugewandte erste Metalllage 41 das Aktivmetall umfasst. Ferner ist es dabei vorstellbar, dass die zweite Metalllage 42 der mindestens einen Metallschicht 20 frei von einem Aktivmetall ist und sich insbesondere dahingehend von der ersten Metalllage 41 unterscheidet. Dadurch ist es möglich, insbesondere an der Außenseite des gefertigten Trägersubstrats 1 eine vorteilhafte Korngröße einzustellen, die andernfalls durch das in der mindestens einen Metallschicht 20 vorzufindende Aktivmetall beeinflusst würde. Die Anbindung erfolgt hierbei über ein Lotmaterial 30 bzw -system. Vorzugsweise ist es vorgesehen, dass eine Dicke der ersten Metalllage 41 kleiner oder größer ist als die Dicke der zweiten Metalllage 42, vorzugsweise ist ein Verhältnis einer Dicke der ersten Metalllage 41 zu der Dicke der zweiten Metalllage 42 so ausgelegt, dass sich ein Wert einstellt zwischen 0,01 und 0,4, bevorzugt 0,01 und 0,3 und besonders bevorzugt zwischen 0,01 und 0,1 oder umgekehrt.

### Bezugszeichen:

- 1: Trägersubstrat
- 10: Isolationselement
- 15: Bindungsschicht
- 20: Metallschicht
- 20`: weitere Metallschicht
- 30: Lotmaterial
- 31: Aktivmetallschicht
- 32: Lotbasismaterialschicht
- 41: erste Metalllage
- 42: zweite Metalllage
- S: Stapelrichtung
- HSE: Haupterstreckungsebene

## Patentansprüche

1. Verfahren zur Herstellung eines Trägersubstrats (1), nämlich eines Metall-Keramik-Substrats, wobei das Trägersubstrat eine Leiterplatte ist, die im gefertigten Zustand dazu dient, Leiterbahnanschlussflächen und/oder Kontakte bereitzustellen, umfassend:
- Bereitstellen eines Isolationselements (10), in Form eines Keramikelements, eines Glaselements oder eines Glaskeramikelements, und mindestens einer Metallschicht (20), wobei sich das Isolationselement (10) und die mindestens eine Metallschicht (20) entlang einer Haupterstreckungsebene (20) erstrecken,
- Bereitstellen eines Lotmaterials (30),
- Bilden eines Stapels, in dem das Isolationselement (10), die mindestens eine Metallschicht (20) und das Lotmaterial (30) in einer senkrecht zur Haupterstreckungsebene (HSE) verlaufenden Stapelrichtung (S) übereinander angeordnet sind, wobei das Lotmaterial (30) zwischen dem Isolationselement (10) und der mindestens einen Metallschicht (20) angeordnet wird und
- Anbinden der mindestens einen Metallschicht (20) an das Isolationselement (10) über das Lotmaterial (30), **dadurch gekennzeichnet,**
**dass** die mindestens eine Metallschicht (20) als Aktivmetall Titan (Ti), Zirkonium (Zr), Hafnium (Hf), Chrom (Cr), Niob (Nb), Cer (Ce), Tantal (Ta), Magnesium (Mg), Lanthan (La) und Vanadium (V), Molybdän (Mo) oder Wolfram (W) umfasst, wobei ein Anteil des Aktivmetalls in der mindestens einen Metallschicht (20) einen Wert zwischen 0,01 und 5 Gew. % annimmt, wobei das Lotmaterial (30) ein Lotbasismaterial ist, wobei das Lotbasismaterial (30) einen Anteil an Aktivmetall von weniger als 1,5 Gew. %, bevorzugt weniger als 1,0 Gew. % und besonders bevorzugt weniger als 0,5 Gew. - % aufweist.

2. Verfahren gemäß einem der vorhergehenden Ansprüche, wobei das Aktivmetall in der mindestens einen Metallschicht (20) homogen verteilt ist, insbesondere entlang der Stapelrichtung (S) über die gesamte Dicke der mindestens einen Metallschicht (20).

3. Verfahren gemäß einem der vorhergehenden Ansprüche, wobei die mindestens eine Metallschicht (20) einstückig ist.

4. Verfahren gemäß einem der vorhergehenden Ansprüche, wobei eine Dicke der mindestens einen Metallschicht (20) größer ist als 1 mm, bevorzugt größer als 1 mm und besonders bevorzugt größer als 1,8 mm.

5. Verfahren gemäß einem der vorhergehenden Ansprüche, wobei das Lotmaterial (30) als Folie bereitgestellt wird, deren in Stapelrichtung (S) gemessene Dicke insbesondere kleiner als 40 µm, bevorzugt kleiner als 40 µm und besonders bevorzugt kleiner als 10 µm ist.

6. Verfahren gemäß einem der vorhergehenden Ansprüche, wobei die mindestens eine Metallschicht (20) in einem Verbund eine erst Metalllage (41) und eine zweite Metalllage (42) umfasst, wobei sich die erste Metalllage (41) von der zweiten Metalllage (42) unterscheidet.

7. Verfahren gemäß einem der vorhergehenden Ansprüche, wobei das Lotmaterial (30) strukturiert aufgetragen wird.

8. Verfahren gemäß einem der vorhergehenden Ansprüche, wobei ein Anteil des Aktivmetalls in der mindestens einen Metallschicht (20) einen Wert zwischen 0,1 und 4 Gew.-% und bevorzugt zwischen 0,5 und 3 Gew. -% annimmt.

9. Verfahren gemäß einem der vorhergehenden Ansprüche, wobei das Anbinden in einem Vakuum, insbesondere in einem Hochvakuum, oder in einer Edelgasatmosphäre, insbesondere bei einem Druck zwischen 1 mbar und 15 mbar, durchgeführt wird.

10. Verfahren gemäß einem der vorhergehenden Ansprüche, wobei partiell auf der mindestens einen Metallschicht (20) eine Blockierschicht aufgetragen wird.

11. Verfahren gemäß einem der vorhergehenden Ansprüche, wobei die mindestens eine Metallschicht (20) an das Isolationselement (10) durch ein heißisostatisches Pressen angebunden wird.

12. Trägersubstrat (1) hergestellt mit einem Verfahren gemäß einem der vorhergehenden Ansprüche.

## Claims

1. A method for manufacturing a carrier substrate (1), namely a metal-ceramic substrate, wherein the carrier substrate is a printed circuit board, which, in a manufactured state, serves to provide conductor track connection areas and/or contacts, comprising:
- providing an insulating element (10), in the form of a ceramic element, a glass element or a glass-ceramic element, and at least one metal layer (20), wherein the insulating element (10) and the at least one metal layer (20) extend along a main extension plane (20), |
- providing a solder material (30),
- forming a stack, in which the insulating element (10), the at least one metal layer (20) and the solder material (30) are arranged on top of each another along a stack direction extending perpendicular to the main extension plane (HSE) , wherein the solder material (30) is arranged between the insulating element (10) and the at least one metal layer (20), and
- bonding the at least one metal layer (20) to the insulating element (10) by the solder material (30), **characterized in that** the at least one metal layer (20) comprises as active metal titanium (Ti), zirconium (Zr), hafnium (Hf), chromium (Cr), niobium (Nb), cerium (Ce), tantalum (Ta), magnesium (Mg), lanthanum (La) and vanadium (V), molybdenum (Mo) or tungsten (W), wherein a proportion of the active metal in the at least one metal layer (20) has a value between 0.01 and 5 wt.-%, wherein the solder material (30) is a solder base material, wherein the solder base material (30) has an active metal content of less than 1.5 wt. -%, more preferably less than 1.0 weight percent and most preferably less than 0.5 wt.-%.

2. The method according to any one of the preceding claims, wherein the active metal is homogeneously distributed in the at least one metal layer (20), in particular along the stacking direction (S) across the entire thickness of the at least one metal layer (20).

3. The method according to any one of the preceding claims, wherein the at least one metal layer (20) is one piece.

4. The method according to any of the preceding claims, wherein a thickness of the at least one metal layer (20) is more than 1 mm, more preferably greater than 1 mm and most preferably greater than 1.8 mm.

5. The method according to any one of the preceding claims, wherein the solder material (30) is provided as a foil whose thickness measured in the stacking direction (S) is in particular less than 40 µm, preferably less than 40 µm, and most preferably less than10 µm.

6. The method according to any one of the preceding claims, wherein the at least one metal layer (20) in a compound comprises a first metal layer (41) and a second metal layer (42), wherein the first metal layer (41) is different from the second metal layer (42).

7. The method according to any one of the preceding claims, wherein the solder material (30) is applied in a structured manner.

8. The method according to one of the preceding claims, wherein a proportion of the active metal in the at least one metal layer (20) has a value between 0.1 and 4 wt. - % and more preferably between 0.5 and 3 wt.-%.

9. The method according to any one of the preceding claims, wherein the bonding is performed in a vacuum, in particular in a high vacuum, or in a noble gas atmosphere, in particular at a pressure between 1 mbar and 15 mbar.

10. The method according to any one of the preceding claims, wherein a blocking layer is partially deposited on the at least one metal layer (20).

11. The method according to any one of the preceding claims, wherein the at least one metal layer (20) is bonded to the insulating element (10) by hot isostatic pressing.

12. A carrier substrate (1) manufactured by the method according to any one of the preceding claims.

## Revendications

1. Procédé de fabrication d'un substrat de support (1), à savoir d'un substrat en métalcéramique, le substrat de support étant une carte à circuits imprimés qui, à l'état fabriqué, sert à fournir des surfaces de connexion de pistes conductrices et/ou des contacts, consistant à :
- fournir un élément isolant (10) sous la forme d'un élément en céramique, d'un élément en verre ou d'un élément en vitrocéramique, et au moins une couche métallique (20), l'élément isolant (10) et ladite au moins une couche métallique (20) s'étendant le long d'un plan d'extension principale (20),
- fournir un matériau de brasage (30),
- former un empilement dans lequel l'élément isolant (10), ladite au moins une couche métallique (20) et le matériau de brasage (30) sont disposés les uns au-dessus des autres dans une direction d'empilement (S) s'étendant perpendiculairement au plan d'extension principale (HSE), le matériau de brasage (30) étant disposé entre l'élément isolant (10) et ladite au moins une couche métallique (20), et
- relier ladite au moins une couche métallique (20) à l'élément isolant (10) par l'intermédiaire du matériau de brasage (30),
**caractérisé en ce que**
ladite au moins une couche métallique (20) comprend, en tant que métal actif, du titane (Ti), du zirconium (Zr), du hafnium (Hf), du chrome (Cr), du niobium (Nb), du cérium (Ce), du tantale (Ta), du magnésium (Mg), du lanthane (La) et du vanadium (V), du molybdène (Mo) ou du tungstène (W), une proportion en métal actif dans ladite au moins une couche métallique (20) prenant une valeur comprise entre 0,01 et 5 % en poids, le matériau de brasage (30) étant un matériau de base de brasage, le matériau de base de brasage (30) ayant une proportion en métal actif inférieure à 1,5 % en poids, de préférence inférieure à 1,0 % en poids et de manière particulièrement préférée inférieure à 0,5 % en poids.

2. Procédé selon la revendication précédente,
dans lequel le métal actif dans ladite au moins une couche métallique (20) est réparti de manière homogène, en particulier sur la totalité de l'épaisseur de ladite au moins une couche métallique (20) le long de la direction d'empilement (S).

3. Procédé selon l'une des revendications précédentes,
dans lequel ladite au moins une couche métallique (20) est monobloc.

4. Procédé selon l'une des revendications précédentes,
dans lequel l'épaisseur de ladite au moins une couche métallique (20) est supérieure à 1 mm, de préférence supérieure à 1 mm et de manière particulièrement préférée supérieure à 1,8 mm.

5. Procédé selon l'une des revendications précédentes,
dans lequel le matériau de brasage (30) est fourni sous la forme d'une feuille dont l'épaisseur, mesurée dans la direction d'empilement (S), est en particulier inférieure à 40 µm, de préférence inférieure à 40 µm et de manière particulièrement préférée inférieure à 10 µm.

6. Procédé selon l'une des revendications précédentes,
dans lequel ladite au moins une couche métallique (20) comprend, sous forme de composite, une première couche métallique (41 ) et une deuxième couche métallique (42), ladite première couche métallique (41) étant différente de ladite deuxième couche métallique (42).

7. Procédé selon l'une des revendications précédentes,
dans lequel le matériau de brasage (30) est déposé de manière structurée.

8. Procédé selon l'une des revendications précédentes,
dans lequel une proportion en métal actif dans ladite au moins une couche métallique (20) prend une valeur comprise entre 0,1 et 4 % en poids, et de préférence entre 0,5 et 3 % en poids.

9. Procédé selon l'une des revendications précédentes,
dans lequel la liaison est réalisée sous vide, en particulier sous vide poussé, ou sous atmosphère de gaz rares, en particulier à une pression comprise entre 1 mbar et 15 mbar.

10. Procédé selon l'une des revendications précédentes,
dans lequel une couche de blocage est déposée partiellement sur ladite au moins une couche métallique (20).

11. Procédé selon l'une des revendications précédentes,
dans lequel ladite au moins une couche métallique (20) est reliée à l'élément isolant (10) par un pressage isostatique à chaud.

12. Substrat de support (1) réalisé par un procédé selon l'une des revendications précédentes.
